**Europäisches Patentamt**

**European Patent Office**

**Office européen des brevets**

(19)

(11) Veröffentlichungsnummer: **0 373 297**
**A2**

## (12) EUROPÄISCHE PATENTANMELDUNG

(21) Anmeldenummer: **89115525.1**

(22) Anmeldetag: **23.08.89**

(51) Int. Cl.5: **H04N 7/087**

(30) Priorität: **16.12.88 DE 3842412**

(43) Veröffentlichungstag der Anmeldung:
**20.06.90 Patentblatt 90/25**

(84) Benannte Vertragsstaaten:
**AT DE FR GB IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Schülein, Reinhard Grundig E.M.V.**
**holländ. Stiftung & Co KG Kurgartenstrasse**
**37**
**D-8510 Fuerth(DE)**
Erfinder: **Siegel, Gerhard Grundig E.M.V.**
**holländ. Stiftung & Co KG Kurgartenstrasse**
**37**
**D-8510 Fuerth(DE)**

(54) **Videorecorder mit einem Fernsehtextdecoder.**

(57) Es ist bereits bekannt, einen Videorecorder unter Verwendung von Fernsehtextseiten zu programmieren. Bei diesem Programmiervorgang werden Programmierdaten wie Sendetag und Anfangs- und Endzeit sowie ggf. VPS-Daten einer gewünschten Sendung aus dem Fernsehtextsignal extrahiert und im Programmierspeicher des Videorecorders abgelegt. Insbesondere bei Sendern, die ihre Sendungen ohne eine VPS-Kennung abstrahlen, muß der Benutzer bei jedem Programmiervorgang die zugehörige Kanalnummer mittels der Bedieneinheit des Videorecorders eingeben. Beim neuen Videorecorder soll die Notwendigkeit, bei jedem Programmiervorgang die dem gewünschten Sender zugehörige Kanalnummer eingeben zu müssen, entfallen.

Beim neuen Videorecorder wird die Zuordnung zwischen Sender und Kanalnummer einmalig durchgeführt und ein Sender- bzw. Programmquellenkennsignal zusammen mit der zugehörigen Kanalnummer abgespeichert. Beim Programmiervorgang wird ein Programmquellenkennsignal aus dem Fernsehtextsignal abgetrennt und mit abgespeicherten Programmquellenkennsignalen verglichen. Bei positivem Vergleich wird die dem Programmquellenkennsignal zugeordnete Kanalnummer zusammen mit den Programmierdaten im Programmierspeicher abgelegt.

# VIDEORECORDER MIT EINEM FERNSEHTEXTDECODER

Die Erfindung betrifft einen Videorecorder mit den im Oberbegriff des Patentanspruchs angegebenen Merkmalen.

Es ist bereits bekannt, die Programmierung eines Videorecorders zur Aufzeichnung von bestimmten Sendungen mittels des sog. VPT-(Videotext Programmierung durch Fernseh-Text) bzw. VPV- (Videotext programmiert Videorecorder) Verfahrens durchzuführen. Dazu werden von den Sendeanstalten im Rahmen des Fernsehtextdienstes Fernsehtextseiten erstellt, welche in Tabellenform Programmvorschauen verschiedener Sender bzw. Programmquellen enthalten. Der Benutzer wählt mittels der Bedieneinheit des Videorecorders eine gewünschte Programmvorschauseite an, welche auf dem Bildschirm eines an den Videorecorder angeschlossenen Fernsehempfängers dargestellt wird. Anschließend verschiebt der Benutzer eine Markierung auf dem Bildschirm, beispielsweise einen Cursor, derart, daß ein bestimmter Beitrag der dargestellten Seite markiert ist. Wird nun eine Speichertaste der Bedieneinheit betätigt, dann werden automatisch dem bestimmten Beitrag zugehörige Programmierdaten aus den Fernsehtextsignalen extrahiert und in einem nichtflüchtigen Programmierspeicher abgelegt. Diese Programmierdaten enthalten mindestens den Sendetag sowie die Anfangs- und Endzeit der Sendung.

Bestimmte Sender strahlen ihre Beiträge mit einer sog. VPS-Kennung ab. Eine solche VPS-Kennung enthält eine ausschließlich dem genannten Beitrag zugeordnete Information. Wird auch diese Information im Rahmen der Programmvorschauseiten übertragen, im Videorecorder aus dem Fernsehtextsignal abgetrennt und zusammen mit den oben genannten Programmierdaten im nichtflüchtigen Programmierspeicher abgelegt, dann kann unter Auswertung dieser Information der Videorecorder auch dann zeitgerecht automatisch eingeschaltet werden, wenn Anfangs- und Endzeit der Sendung vom Sender kurzfristig geändert werden. Hierzu werden zyklisch die Signale in allen empfangbaren Kanälen auf das Auftreten der VPS-Kennung überprüft. Eine manuellen Eingabe der Nummer des Kanals, in dem der gewünschte Beitrag erwartet wird, ist folglich nicht notwendig.

Es gibt jedoch auch Sender, die ihre Beiträge ohne eine VPS-Kennung abstrahlen. In diesem Fall muß der Benutzer im Rahmen eines Programmierdialoges die Nummer des Kanals, in dem der gewünschte Beitrag erwartet wird, mittels der Bedieneinheit des Videorecorders eingeben. Die weiteren Programmierdaten (Sendetag, Anfangs- und Endzeit der Sendung) können - wie es oben beschrieben wurde - aus einer Programmvorschauseite

übernommen werden.

Ausgehend vom vorbeschriebenen Stand der Technik liegt der Erfindung die Aufgabe zugrunde, einen Videorecorder mit den im Oberbegriff des Patentanspruchs angegebenen Merkmalen derart weiterzubilden, daß der Programmiervorgang für den Benutzer weiter vereinfacht ist.

Diese Aufgabe wird bei einem Videorecorder mit den im Oberbegriff des Patentanspruchs angegebenen Merkmalen durch die im kennzeichnenden Teil des Anspruchs angegebenen Merkmale gelöst.

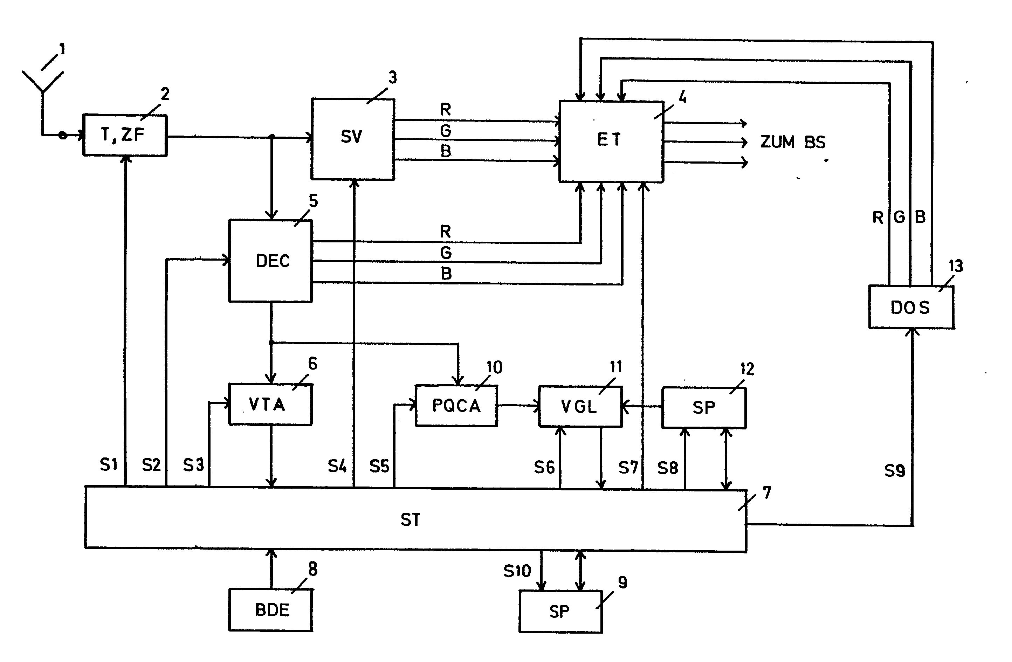

Die Vorteile der Erfindung bestehen insbesondere darin, daß in einem Videorecorder mit den beanspruchten Merkmalen automatisch aus einer im Fernsehtextsignal enthaltene Senderkennung Rückschlüsse auf die Nummer des Kanals gezogen werden, in dem der gewünschte Sendebeitrag erwartet wird. Weitere vorteilhafte Eigenschaften der Erfindung ergeben sich aus der Erläuterung eines Ausführungsbeispieles anhand der Figur.

Die Figur zeigt einen mit einer Antenne 1 verbundenen Videorecorder mit einem Empfangsteil 2, einer Signalverarbeitungsschaltung 3, einer Eintastschaltung 4, einen Fernsehtextdecoder 5, einer Fernsehtextauswerteschaltung 6, einer Steuerschaltung 7, einer Bedieneinheit 8, einem nichtflüchtigen Programmierspeicher 9, einer Programmquellen-Kennsignalauswerteschaltung 10, einem Vergleicher 11, einem nichtflüchtigen Zuordnungsspeicher 12 und einem DOS-Baustein 13 (display on screen).

Die Steuerschaltung 7 dient zur Steuerung der Arbeitsweise der vorgenannten Schaltungen 2, 3, 4, 5, 6, 9, 10, 11, 12 und 13, was durch die Steuerleitungen S1, S2, ..., S 10 angedeutet ist.

Das von der Antenne 1 empfangene hochfrequente Videosignal wird dem Empfangsteil 2 zugeführt, welches einen Tuner und einen ZF-Verstärker aufweist. Am Ausgang des Empfangsteils 2 steht ein FBAS-Signal zur Verfügung. Dieses wird in der Signalverarbeitungsschaltung 3 in ein Komponentensignal, beispielsweise ein RGB-Signal, umgewandelt. Das am Ausgang der Signalverarbeitungsschaltung 3 erhaltene RGB-Signal wird der Eintastschaltung 4 zugeführt.

Ferner werden aus dem am Ausgang des Empfangsteils 2 zur Verfügung stehenden FBAS-Signal im Fernsehtextdecoder 5 die in den vertikalen Austastlücken übertragenen Fernsehtextsignale abgetrennt und ebenfalls der Eintastschaltung 4 zugeführt.

Durch geeignete Steuerung des Eintastvorgangs durch die Steuerschaltung 7 können die Fernsehtextsignale entweder dem normalen Fernsehbild oder Signalen, die im DOS-Baustein 13 erzeugt werden, überlagert werden. Die Ausgangssignale der Eintastschaltung werden entweder in Komponentenform oder nach Rückumwandlung in ein FBAS-Signal einem an den Videorecorder angeschlossenen Fernsehempfänger zugeführt und auf dessen Bildschirm dargestellt.

Soll der Videorecorder zur Aufzeichnung einer bestimmten Sendung eines Sendes programmiert werden, insbesondere eines Senders, dessen Sendungen ohne eine VPS-Kennung ausgestrahlt werden, so wird mittels der Bedieneinheit 8 diejenige Fernsehtextseite angewählt, die die Programmvorschau für den gewünschten Sender enthält. Anschließend wird mittels der Bedieneinheit ein Cursor auf dem Bildschirm, auf dem die angewählte Fernsehtextseite dargestellt wird, derart verschoben, daß die gewünschte Sendung markiert ist. Wird nun eine Speichertaste der Bedieneinheit betätigt, dann werden in der Fernsehtextauswerteschaltung 6 die zur gewünschten Sendung gehörigen Programmierdaten (Sendetag, Anfangszeit, Endzeit) aus den Fernsehtextsignalen extrahiert. Weiterhin wird in der Programmquellen-Kennsignalauswerteschaltung 10 ein für den Sender der gewüschten Sendung charakteristisches Programmquellenkennsignal aus dem Fernsehtextsignal extrahiert. Dieses Programmquellenkennsignal wird - ggf. nach vorheriger Umcodierung - einem Eingang des Vergleichers 11 zugeführt.

Dem anderen Eingang des Verfahrens 11 werden im nichtflüchtigen Zuordnungsspeicher 12 abgespeicherte Programmquellenkennsignale zugeführt. Die Aufgabe des Vergleichers 11 besteht darin, zu erkennen, ob im nichtf lüchtigen Zuordnungsspeicher 12 bereits ein Programmquellenkennsignal einschließlich der zugehörigen Kanalnummer abgespeichert ist, welches mit dem aus dem Fernsehtextsignal abgetrennten Programmquellenkennsignal übereinstimmt.

Ist das der Fall, dann wird die zugehörige Kanalnummer zusammen mit den Programmierdaten (Sendetag, Anfangszeit, Endzeit) im Programmierspeicher 9 abgelegt. Ist das nicht der Fall, dann steuert die Steuerschaltung 7 den DOS-Baustein 13 derart an, daß dieser an seinem Ausgang ein die Eingabe der Kanalnummer anforderndes Textsignal zur Verfügung stellt. Dieses Textsignal wird über die Eintastschaltung 4 dem an den Videorecorder angeschlossenen Fernsehempfänger zugeführt und auf dessen Bildschirm dargestellt. Hat der Benutzer die gewünschte Kanalnummer eingegeben, so wird diese einerseits zusammen mit den Programmierdaten (Sendetag, Anfangszeit, Endzeit) im Programmierspeicher 9 und andererseits zusammen mit dem Programmquellenkennsignal im nichtflüchtigen Zuordnungsspeicher 12 abgelegt, so daß diese Zuordnung für nachfolgende Programmiervorgänge zur Verfügung steht.

Die Zuordnung zwischen Kanalnummer und Programmquellenkennsignal erfolgt lediglich einmalig und kann entweder - wie es vorstehend beschrieben wurde - im Rahmen eines Programmiervorganges oder bereits bei der Abstimmung des Videorecorders auf die am Aufstellungsort des Videorecorders empfangbaren Sender erfolgen.

Ist diese Zuordnung erfolgt, dann bleibt sie erhalten und steht für alle nachfolgenden Programmiervorgänge zur Verfügung. Der Benutzer braucht damit nicht bei jedem Programmiervorgang die Kanalnummer des gewünschten Senders mittels der Bedientastatur eingeben.

## Ansprüche

Videorecorder mit
- einem Fernsehtextdecoder zum Extrahieren eines Fernsehtextsignals aus einem Videosignal,
- einer Fernsehtextauswerteschaltung zum Extrahieren von Programmierdaten aus dem Fernsehtextsignal,
- einer nichtflüchtigen ersten Speichereinheit zur Abspeicherung der Programmierdaten,
- einer Bedieneinheit zur Anwahl einer in den Fernsehtextsignalen enthaltenen, eine Programmvorschau aufweisenden Fernsehtextseite und eines bestimmten Beitrags dieser Fernsehtextseite sowie zur Zuordnung von Kanalnummern zu Programmquellen,
- einer nichtflüchtigen zweiten Speichereinheit zur gemeinsamen Abspeicherung von Programmquellen-Kennsignalen und den jeweils zugehörigen Kanalnummern,
- einer Steuerschaltung, und
- einem Textbaustein,
**dadurch gekennzeichnet**, daß
- eine Programmquellen-Kennsignalauswerteschaltung (10) zum Extrahieren eines im Fernsehtextsignal enthaltenen Programmquellen-Kennsignals und eine Schaltung (7, 11) vorgesehen sind, welche überprüft, ob der durch das extrahierte Programmquellen-Kennsignal spezifizierten Programmquelle in der nichtflüchtigen zweiten Speichereinheit (12) bereits eine Kanalnummer zugeordnet ist oder nicht, und
- die Steuerschaltung (7) bei erfolgreicher Überprüfung die gemeinsame Abspeicherung der der Programmquelle zugeordneten Kanalnummer und der Programmierdaten in der nichtflüchtigen ersten Speichereinheit (9) initiiert und bei nicht erfolgreicher Überprüfung den Textbaustein (13) derart aussteuert, daß dieser an seinem Ausgang ein die Eingabe der Kanalnummer anforderndes Textsignal zur Verfügung stellt.